# EUROPÄISCHE PATENTSCHRIFT

(11) **EP 2 065 258 B1**
(45) Veröffentlichungstag und Bekanntmachung des Hinweises auf die Patenterteilung: **01.06.2011**
(21) Anmeldenummer: 07023266.5
(22) Anmeldetag: 30.11.2007
(51) Int. Cl.: B60R 13/00

(54) **Dekorbauteil und Verfahren zur Herstellung eines Dekorbauteils**
Decorative component and method for manufacturing a decorative component
Elément de décor et procédé de fabrication d'un élément de décor

(43) Veröffentlichungstag der Anmeldung: 03.06.2009
(73) Patentinhaber: Jacob Plastics GmbH, 91489 Wilhelmsdorf (DE)
(72) Erfinder: Jungmeier, Marco, D-90419 Nürnberg (DE); Wlasak, Klaus, D-91489 Wilhelmsdorf (DE)
(74) Vertreter: Herrmann, Uwe

(56) Entgegenhaltungen:
- DE-U1-202005 010 582
- DE-U1-202005 011 127
- GB-A- 2 290 651
- US-A- 6 003 895
- US-B1- 6 180 207

## Beschreibung

Die vorliegende Erfindung betrifft ein Dekorbauteil mit einem ersten Insert und mit einem zweiten Insert sowie mit einem Substrat, mit dem das erste und/oder das zweite Insert hinterfüttert sind, wobei vorzugsweise vorgesehen ist, das erste und das zweite Insert wenigstens teilweise die sichtbare Fläche des Bauteils bilden.

Derartige Dekorbauteile werden beispielsweise im Bereich der Automobilindustrie eingesetzt und dienen dort beispielsweise als Verzierungen im Bereich der Instrumente bzw. des Armaturenbrettes. Die Inserts vorbekannter Dekorbauteile bestehen im Allgemeinen aus ein- oder mehrschichtigen Kunststoffen bzw. Kunststofffolien.

US-B1-6 180 207 offenbart ein von einer Folie bedecktes Kunststoffteil der Fahrzeugausstattung und das Verfahren zur Herstellung des Kunststoffteils. Das Kunststoffteil weist ein Kunststoffsubstrat auf, das mindestens einen Folieempfangabschnitt auf seiner Außenfläche umfaßt. Eine Folie umfaßt eine Chromfoliedecklage und eine Kunststoffbodenschicht, wobei die Chromfoliedecklage an die Kunststoffbodenschicht aufgelegt wird und wobei die Kunststoffbodenschicht an dem Folieempfangabschnitt anhaftet. Zur Herstellung des sogenannten Kunststoffteils wird ein Heißstempelmaschine benutzt.

DE 20 2005 010582 offenbart ein Markenemblem oder eine Markenplakette, bestehend aus zumindest einem Emblemträger und einer auf dem Emblemträger befestigen Elektrolumineszenzfolie, insbesondere zur Verwendung an Fahrzeugen. An der dem Emblemträger abgewandten Seite der Elektrolumineszenzfolie ist eine Linse angeordnet und an der der Elektrolumineszenzfolie abgewandten Seite der Linse ist eine Folie angeordnet. Die Linsen und/oder die Folie ist nach dem IMD oder IML Verfahren beschichtet.

Der vorliegenden Erfindung liegt die Aufgabe zugrunde, ein Dekorbauteil der eingangs genannten Art dahingehend weiterzubilden, dass dessen Einsatzmöglichkeiten erweitert bzw. die optischen Gestaltungsmöglichkeiten durch das Dekorbauteil vergrößert werden.

Diese Aufgabe wird durch ein Dekorbauteil mit den Merkmalen des Anspruchs 1 gelöst.

Danach ist vorgesehen, dass das erste und das zweite Insert vollständig oder teilweise aus unterschiedlichen Materialien bestehen und/oder dass das erste und das zweite Insert eine unterschiedliche Ausgestaltung aufweisen. Denkbar ist es somit beispielsweise, dass das Dekorbauteil ein Insert aus einem Echtmetall und ein Insert aus Kunststoff aufweist, die gemeinsam von einem oder mehreren Substraten hinterfüttert sind.

Die Erfindung ist nicht auf den Einsatz unterschiedlicher Insert-Materialien beschränkt. Denkbar ist auch der Einsatz identischer Materialien für das erste und für das zweite Insert, die jedoch eine unterschiedliche Ausgestaltung, wie beispielsweise eine unterschiedliche Struktur, Schichtabfolge, Beschichtung, Farbe etc. aufweisen. Unter dem Begriff "Ausgestaltung" ist auch zu verstehen, dass die Inserts eine Beschichtung aufweisen oder ohne Beschichtung ausgeführt sind.

Eine mögliche Anwendung wäre der Einsatz beispielsweise zweier Kunststofffolien oder zweier Metallfolien, die eine unterschiedliche Oberflächengestaltung, Farbe, Muster und dergleichen aufweisen, die jedoch aus demselben oder einem ähnlichen Material bestehen. Von der Erfindung ist somit beispielsweise auch der Fall umfasst, dass das erste Insert und das zweite Insert als Kunststofffolien ausgeführt sind.

Auch ist von der Erfindung der Fall umfasst, dass sich das erste und das zweite Insert sowohl in der Materialwahl als auch in der Ausgestaltung unterscheiden. Denkbar ist somit beispielsweise eine Kombination aus Echtmetall und Kunststoff, wobei die beiden Inserts eine unterschiedliche Oberflächengestaltung aufweisen können.

In bevorzugter Ausgestaltung der Erfindung ist vorgesehen, dass es sich bei den Inserts um Folien bzw. dünne Schichten handelt. Dabei müssen die wenigstens zwei Inserts des Dekorbauteils gemäß der vorliegenden Erfindung nicht zwingend die gleiche Dicke aufweisen, wenngleich eine solche Ausführung selbstverständlich ebenfalls von der vorliegenden Erfindung umfasst ist.

Wie ausgeführt kann wenigstens eines der Inserts aus Echtmetall bestehen oder Echtmetall aufweisen. Denkbar ist es auch, dass beide Inserts aus Echtmetall bestehen oder Echtmetall aufweisen, wobei beispielsweise unterschiedliche Metallsorten zum Einsatz kommen. Die beiden Inserts können als getrennte Bauteile zum Einsatz kommen oder auch im miteinander verbundenen Zustand in das Werkzeug eingelegt werden.

Auch ist es denkbar, dass wenigstens eines der Inserts aus Kunststoff besteht oder Kunststoff aufweist. In Betracht kommen beispielsweise Polyvinyle, Polyacryle, Polyurethane, Polycarbonate, Polypropylene, Polyethylene etc. sowie Kombinationen dieser Materialien.

In einer weiteren Ausgestaltung der Erfindung ist vorgesehen, dass wenigstens eines der Inserts aus Holz besteht oder Holz aufweist. So ist beispielsweise eine Kombination denkbar, bei der ein Insert des Dekorbauteils aus Holz und das andere Insert des Dekorbauteils aus Kunststoff besteht.

Denkbar ist es ferner, dass wenigstens eines der Inserts aus Carbon bzw. Carbonfasern besteht bzw. Carbon oder Carbonfasern aufweist.

Auch ist es möglich, dass wenigstens eines der Inserts aus Textil besteht oder Textil aufweist.

In einer weiteren Ausgestaltung der Erfindung ist vorgesehen, dass wenigstens eines der Inserts aus Glas oder Glasfasern besteht oder Glas oder Glasfasern aufweist. So ist beispielsweise auch der Einsatz eines Glasfasergewebes denkbar. Schließlich kann vorgesehen sein, dass wenigstens eines der Inserts aus Leder besteht oder Leder aufweist.

Die oben genannten Materialien können in jeder beliebigen Kombination in dem erfindungsgemäßen Dekorbauteil zum Einsatz kommen. Die Inserts können nebeneinander oder beispielsweise auch derart ausgeführt sein, dass ein Insert das andere Insert umgibt. Des Weiteren können selbstverständlich auch mehr als zwei Inserts zum Einsatz kommen.

In weiterer Ausgestaltung der Erfindung ist vorgesehen, dass wenigstens eines der Inserts einen oder mehrere funktionale Bestandteile aufweist. Denkbar ist es beispielsweise, dass es sich bei dem oder den funktionalen Bestandteilen um leuchtende Bestandteile des Inserts handelt. So ist es denkbar, dass eine Leuchtfolie zum Einsatz kommt, die an sich zum einen relativ teuer und zum anderen relativ schwer zu verarbeiten ist. Erfindungsgemäß kann vorgesehen sein, diese Leuchtfolie mit einem anderen Material, wie beispielsweise mit einem Kunststoff-Insert zu kombinieren, so dass man insbesondere bei größeren Bauteilen den Vorteil hat, dass nur der Bereich, der Leuchtwirkung entfalten soll, mit der Leuchtfolie ausgeführt ist und die sonstigen Bereiche beispielsweise mit einer Standard-Kunststofffolie. Dieses Beispiel gilt selbstverständlich nicht nur für Kunststofffolien bzw. Kunststoff-Inserts, sondern auch für beliebige andere Materialien. Denkbar ist es somit beispielsweise auch, nicht zwei Kunststoff-Inserts in Kombination zu verwenden, sondern ein Kunststoff-Insert mit einem Echtmetall etc.

In weiterer Ausgestaltung der vorliegenden Erfindung ist vorgesehen, dass das Substrat durch Hinterspritzen, insbesondere durch das In-Mold-Verfahren, durch Schäumen oder auch durch Hinterpressen oder dergleichen aufgebracht ist. Besonders vorteilhaft ist die Anwendung des In-Mold-Verfahrens. In diesem Fall sind auf vergleichsweise einfache Art und Weise auch komplexe Geometrien realisierbar.

Das erste und/oder das zweite Insert können ein- oder auch mehrschichtig aufgebaut sein. Denkbar ist es beispielsweise, dass die Inserts als solche eine Substratschicht und eine die Oberfläche bildende Schicht aufweisen. Dabei kann vorgesehen sein, dass ein Dekoreffekt durch die die Oberfläche bildende Schicht erreicht wird oder auch durch das Substrat, was voraussetzt, dass die die Oberfläche bildende Schicht transparent oder translucent ausgeführt ist.

Das erste und/oder das zweite Insert können vorgeformt sein oder auch im nicht vorgeformten Zustand, insbesondere flächig zum Einsatz kommen.

Das erste und/oder das zweite Insert können einen Haftvermittler oder Haftverbesserer aufweisen und/oder derart vorbehandelt sein, dass die Haftung des oder der Inserts an dem oder den Substraten verbessert ist. Auf diese Weise ist sichergestellt, dass eine besonders gute Haftung zu dem oder den Substraten vorliegt. Denkbar ist beispielsweise der Einsatz eines Schmelzklebers, eines duroplastischen Klebers, von Phenolharz etc. Alternativ oder zusätzlich kann das oder die Inserts auf geeignete Weise derart vorbehandelt sein, dass eine gute Haftung zum Substrat vorliegt.

Das erste und/oder das zweite Insert können beispielsweise aus einem oder mehreren der Materialien Stoff, Metall, Glas, Carbon, Textil, Leder, Holz etc bestehen oder eines oder mehrere dieser Materialien aufweisen.

Das erste und/oder das zweite Insert können zur Haftverbesserung und/oder zur Verhinderung der Durchspülung durch die Schmelze mit einer Barriereschicht, beispielsweise in Form einer Folie ausgeführt bzw. kaschiert sein. Bei der Folie bzw. Schicht kann es sich z.B. um eine Kunststofffolie handeln. Grundsätzlich ist es auch denkbar und von der Erfindung umfasst, die Barriereschicht, d.h. beispielsweise eine Kunststofffolie ohne die genannten Deckschichten aus Stoff, Metall, Glas, Carbon, Textil, Leder, Holz etc. auszuführen.

Eine weitere Ausgestaltung der Erfindung besteht darin, dass das erste und/oder das zweite Insert durch das IMD-Verfahren (In-Mold-Decoration) aufgebracht ist. IMD bedeutet, dass eine Endlosfolie durch das Werkzeug geführt wird, die auf einer Seite z.B. mit Lack beschichtet ist. Das Werkzeug wird geschlossen und dabei die Folie fixiert. Anschließend wird auf der Seite der Folie auf der der Lack oder die Beschichtung sitzt hinterfüttert. Dadurch löst sich der Lack/Beschichtung etc. von der Endlosfolie ab und haftet auf dem Substrat (Spitzgussmasse oder dergleichen). Nach dem Öffnen des Werkzeuges wird die "leere" Folie weitertransportiert, bis wieder Folie mit Lack/Beschichtung im Werkzeug vorhanden ist.

Der im Rahmen der vorliegenden Erfindung verwendete Begriff "Insert" umfasst ausdrücklich auch solche mit dem genannten IMD-Verfahren auf- bzw. eingebrachte Schichten, Folien und dergleichen.

Denkbar ist es, dass beide bzw. alle Inserts durch das IMD-Verfahren eingebracht werden bzw. sind. Denkbar ist es jedoch auch, dass unterschiedliche Verfahren zur Anwendung kommen, um die Inserts einzubringen. Möglich ist es beispielsweise, dass das erste Insert in das Werkzeug eingelegt und das zweite Insert durch das IMD-Verfahren eingebracht wird.

Die vorliegende Erfindung betrifft des Weiteren ein Dekorbauteil mit einem ersten Insert und mit einem zweiten Insert sowie mit wenigstens einem Substrat, mit dem das erste und/oder das zweite Insert hinterfüttert sind, wobei das erste und das zweite Insert wenigstens teilweise die sichtbare Fläche des Bauteils bilden, und wobei das erste und das zweite Insert unmittelbar oder mittelbar stumpf aneinander grenzen. In dieser Ausgestaltung der Erfindung ist somit vorgesehen, dass die Inserts nicht überlappen, sondern stumpf aneinander grenzen, womit ein vorteilhafter optischer Gesamteindruck erzielt werden kann. Mit dem Begriff "stumpf aneinander grenzen" ist nicht gemeint, dass ein Insert mit seinem Endbereich auf der Oberfläche des anderen Inserts aufliegt, sondern dass beide Inserts eine diese abschließende Kante aufweisen und dass diese Kanten unmittelbar oder auch mittelbar aneinander anliegen. Mit "mittelbar" ist in diesem Zusammenhang der Fall erfasst, dass sich zwischen den Kanten eine Nut befindet, die beispielsweise mit einer geeigneten Füllung ausgefüllt sein kann.

Der Bereich des Dekorbauteils, in dem die Inserts aneinandergrenzen, kann beispielsweise als Vertiefung des Dekorbauteils ausgeführt sein.

Die vorliegende Erfindung betrifft des Weiteren ein Kraftfahrzeug mit wenigstens einem Dekorbauteil nach einem der Ansprüche 1 bis 21. Das Dekorbauteil kann hier beispielsweise im Bereich der Armaturen, der Türen etc. zum Einsatz kommen.

Die vorliegende Erfindung betrifft schließlich ein Verfahren zur Herstellung eines Bauteils nach einem der Ansprüche 1 bis 21, wobei die Herstellung des Bauteils in einem einzigen Werkzeug erfolgt. Denkbar ist es, dass das erste sowie das zweite Insert in das Werkzeug eingelegt werden und dass sodann das Aufbringen des Substrates erfolgt. Das Einlegen bzw. Einbringen des bzw. der Inserts kann nach demselben oder nach unterschiedlichen Verfahren erfolgen.

Die vorliegende Erfindung betrifft ferner ein Verfahren zur Herstellung eines Bauteils nach einem der Ansprüche 1 bis 21, dass dadurch gekennzeichnet ist, dass das erste und/oder das zweite Insert durch das IMD-Verfahren (In-Mold-Decoration) in das Werkzeug eingebracht wird. Denkbar ist es, beide bzw. alle Inserts durch das IMD-Verfahren einzubringen. Denkbar ist jedoch auch, unterschiedliche Verfahren zu kombinieren, indem beispielsweise ein Insert in das Werkzeug eingelegt wird und das andere Insert durch das IMD-Verfahren eingebracht wird.

Wie oben ausgeführt, ist insbesondere vorteilhaft, wenn das erste und das zweite Insert derart in das Werkzeug eingelegt werden, dass die zueinander gewandten Kanten der Inserts unmittelbar oder mittelbar stumpf aneinander grenzen. Die wenigstens zwei Inserts können getrennt voneinander in das Werkzeug eingelegt werden oder auch zuvor verbunden werden.

In weiterer Ausgestaltung der Erfindung ist vorgesehen, dass das Aufbringen des Substrats durch Hinterspritzen, insbesondere durch das In-Mold-Verfahren, durch Schäumen oder auch durch Hinterpressen erfolgt.

Weitere Vorteile und Einzelheiten der Erfindung werden anhand eines im Folgenden beschriebenen Ausführungsbeispiels näher erläutert.

Zur Herstellung eines Dekorbauteils werden in das Werkzeug eine Echtmetallfolie sowie daran stumpf angrenzend eine Kunststofffolie eingelegt. Nach entsprechender Positionierung des Werkzeuges werden die Inserts sodann durch das In-Mold-Verfahren hinterspritzt, so dass in einem Arbeitsschritt und in einem Werkzeug ein Dekorbauteil mit anspruchsvollen und weitgehend frei wählbaren Oberflächen hergestellt wird. Bei dem Substrat kann es sich beispielsweise um ein weitgehend beliebiges Harz bzw. thermoplastisches Material handeln, das eine hinreichende Haftfähigkeit zu dem bzw. den Inserts aufweist.

Durch das Substrat wird nicht nur sichergestellt, dass die Inserts an dem Substrat selbst haften, sondern dass auch die Positionierung der Inserts zueinander fixiert ist. Grenzen die einander zugewandten Kanten der Inserts beispielsweise stumpf aneinander, wird das Substrat vorzugsweise derart gewählt, dass es während der Lebensdauer des Dekorbauteils nicht zu einem Trennen dieser Kanten durch Formänderung des Substrats kommen kann.

## Patentansprüche

1. Dekorbauteil mit einem ersten Insert und mit einem zweiten Insert sowie mit wenigstens einem Substrat, mit dem das erste und/oder das zweite Insert hinterfüttert sind, wobei das erste und das zweite Insert wenigstens teilweise die sichtbare Fläche des Bauteils bilden, wobei das erste und das zweite Insert vollständig oder teilweise aus unterschiedlichen Materialien bestehen und/oder vollständig oder teilweise unterschiedlich ausgestaltet sind, wobei das Dekorbauteil in einem einzigen Werkzeug hergestellt ist.

2. Dekorbauteil nach Anspruch 1, **dadurch gekennzeichnet, dass** es sich bei den Inserts um Folien oder dünne Schichten handelt.

3. Dekorbauteil nach Anspruch 1 oder 2, **dadurch gekennzeichnet, dass** wenigstens eines der Inserts aus Echtmetall besteht oder Echtmetall aufweist.

4. Dekorbauteil nach einem der vorhergehenden Ansprüche, **dadurch gekennzeichnet, dass** wenigstens eines der Inserts aus Kunststoff besteht oder Kunststoff aufweist.

5. Dekorbauteil nach einem der vorhergehenden Ansprüche, **dadurch gekennzeichnet, dass** wenigstens eines der Inserts aus Holz besteht oder Holz aufweist.

6. Dekorbauteil nach einem der vorhergehenden Ansprüche, **dadurch gekennzeichnet, dass** wenigstens eines der Inserts aus Carbon bzw. Carbonfasern besteht oder Carbon oder Carbonfasern aufweist.

7. Dekorbauteil nach einem der vorhergehenden Ansprüche, **dadurch gekennzeichnet, dass** wenigstens eines der Inserts aus Textil besteht oder Textil aufweist.

8. Dekorbauteil nach einem der vorhergehenden Ansprüche, **dadurch gekennzeichnet, dass** wenigstens eines der Inserts aus Glas oder Glasfasern besteht oder Glas oder Glasfasern aufweist.

9. Dekorbauteil nach einem der vorhergehenden Ansprüche, **dadurch gekennzeichnet, dass** wenigstens eines der Inserts aus Leder besteht oder Leder aufweist.

10. Dekorbauteil nach einem der vorhergehenden Ansprüche, **dadurch gekennzeichnet, dass** wenigstens eines der Inserts einen oder mehrere funktionale Bestandteile aufweist.

11. Dekorbauteil nach Anspruch 10, **dadurch gekennzeichnet, dass** es sich bei dem oder den funktionalen Bestandteilen um leuchtende Bestandteile des Inserts handelt.

12. Dekorbauteil nach Anspruch 10 oder 11, **dadurch gekennzeichnet, dass** es sich bei wenigstens einem der Inserts um eine Leuchtfolie handelt.

13. Dekorbauteil nach einem der vorhergehenden Ansprüche, **dadurch gekennzeichnet, dass** das Substrat durch Hinterspritzen, insbesondere durch das In-Mold-Verfahren, durch Schäumen oder durch Hinterpressen aufgebracht ist.

14. Dekorbauteil nach einem der vorhergehenden Ansprüche, **dadurch gekennzeichnet, dass** das erste und/oder das zweite Insert ein- oder mehrschichtig aufgebaut sind.

15. Dekorbauteil nach einem der vorhergehenden Ansprüche, **dadurch gekennzeichnet, dass** das erste und/oder das zweite Insert vorgeformt oder nicht vorgeformt sind.

16. Dekorbauteil nach einem der vorhergehenden Ansprüche, **dadurch gekennzeichnet, dass** das erste und/oder das zweite Insert einen Haftvermittler oder Haftverbesserer aufweisen und/oder derart vorbehandelt sind, dass die Haftung des oder der Inserts an dem oder den Substraten verbessert ist.

17. Dekorbauteil nach einem der vorhergehenden Ansprüche, **dadurch gekennzeichnet, dass** das erste und/oder das zweite Insert mit einer Kunststofffolie oder einer anderweitig ausgeführten Barrierefolie versehen sind.

18. Dekorbauteil nach einem der vorhergehenden Ansprüche, **dadurch gekennzeichnet, dass** das erste und/oder das zweite Insert durch das IMD-Verfahren (In-Mold-Decoration) aufgebracht ist.

19. Dekorbauteil nach einem der vorhergehenden Ansprüche, wobei das erste und das zweite Insert unmittelbar oder mittelbar stumpf aneinander grenzen.

20. Dekorbauteil nach Anspruch 19, **dadurch gekennzeichnet, dass** das Dekorbauteil eine Vertiefung aufweist und dass der Bereich, in dem die Inserts aneinandergrenzen, in der Vertiefung angeordnet ist.

21. Kraftfahrzeug mit wenigstens einem Dekorbauteil nach einem der Ansprüche 1 bis 20.

22. Verfahren zur Herstellung eines Bauteils nach einem der Ansprüche 1 bis 20, **dadurch gekennzeichnet, dass** die Herstellung des Bauteils in einem einzigen Werkzeug erfolgt.

23. Verfahren nach Anspruch 22, **dadurch gekennzeichnet, dass** das erste und/oder das zweite Insert durch das IMD-Verfahren (In-Mold-Decoration) in das Werkzeug eingebracht wird.

24. Verfahren nach einem der Ansprüche 22 oder 23, **dadurch gekennzeichnet, dass** zunächst das erste sowie das zweite Insert getrennt voneinander oder im verbundenen Zustand in das Werkzeug eingebracht werden und dass sodann das Aufbringen des Substrates erfolgt.

25. Verfahren nach Anspruch 24, **dadurch gekennzeichnet, dass** das erste und das zweite Insert derart in das Werkzeug eingebracht werden, dass die zueinander gewandten Kanten der Inserts stumpf aneinander grenzen.

26. Verfahren nach einem der Ansprüche 22 bis 25, **dadurch gekennzeichnet, dass** das Aufbringen des Substrats durch Hinterspritzen, insbesondere durch das In-Mold-Verfahren, durch Schäumen oder durch Hinterpressen erfolgt.

## Claims

1. A decorative component having a first insert and having a second insert as well as having at least one substrate with which the first insert and/or the second insert are lined at the back, wherein the first insert and the second insert at least partly form the visible surface of the component, wherein the first insert and the second insert completely or partially comprise different materials and/or are completely or partially differently designed, wherein the decorative component is manufactured in a single tool.

2. A decorative component in accordance with claim 1, **characterised in that** the inserts are films or thin layers.

3. A decorative component in accordance with either of claims 1 or 2, **characterised in that** at least one of the inserts consists of real metal or comprises real metal.

4. A decorative component in accordance with one of the preceding claims, **characterised in that** at least one of the inserts consists of plastic or comprises plastic.

5. A decorative component in accordance with one of the preceding claims, **characterised in that** at least one of the inserts consists of wood or comprises wood.

6. A decorative component in accordance with one of the preceding claims, **characterised in that** at least one of the inserts consists of carbon or carbon fibres or comprises carbon or carbon fibres.

7. A decorative component in accordance with one of the preceding claims, **characterised in that** at least one of the inserts consists of textile or comprises textile.

8. A decorative component in accordance with one of the preceding claims, **characterised in that** at least one of the inserts consists of glass or glass fibres or comprises glass or glass fibres.

9. A decorative component in accordance with one of the preceding claims, **characterised in that** at least one of the inserts consists of leather or comprises leather.

10. A decorative component in accordance with one of the preceding claims, **characterised in that** at least one of the inserts has one or more functional constituents.

11. A decorative component in accordance with claim 10, **characterised in that** the functional constituent(s) is/are luminous constituents of the insert.

12. A decorative component in accordance with either of claims 10 or 11, **characterised in that** at least one of the inserts is a luminous film.

13. A decorative component in accordance with one of the preceding claims, **characterised in that** the substrate is applied by back injection moulding, in particular by the in-mould process, by foaming or by back pressing.

14. A decorative component in accordance with one of the preceding claims, **characterised in that** first insert and/or the second insert are made up of one layer or multiple layers.

15. A decorative component in accordance with one of the preceding claims, **characterised in that** first insert and/or the second insert are preshaped or not preshaped.

16. A decorative component in accordance with one of the preceding claims, **characterised in that** the first insert and/or the second insert have an adhesive agent or an adhesive promoter and/or are pretreated such that the adhesion of the insert or inserts is improved at the substrate or substrates.

17. A decorative component in accordance with one of the preceding claims, **characterised in that** the first insert and/or the second insert are provided with a plastic film or with a differently designed barrier film.

18. A decorative component in accordance with one of the preceding claims, **characterised in that** the first insert and/or the second insert is/are applied by the IMD process (in-mould decoration).

19. A decorative component in accordance with one of the preceding claims, wherein the first insert and the second insert are directly or indirectly adjacent to one another in an obtuse manner.

20. A decorative component in accordance with claim 19, **characterised in that** the decorative component has a recess; and **in that** the region in which the inserts are adjacent to one another is arranged in the recess.

21. A motor vehicle having at least one decorative component in accordance with one of the claims 1 to 20.

22. A method of manufacturing a component in accordance with one of the claims 1 to 20, **characterised in that** the manufacture of the component takes place in a single tool.

23. A method in accordance with claim 22, **characterised in that** the first insert and/or the second insert are introduced into the tool by the IMP process (in-mould decoration).

24. A method in accordance with either of claims 22 or 23, **characterised in that** the first insert and the second insert are first introduced into the tool separately from one another or in a connected state; and **in that** the application of the substrate then takes place.

25. A method in accordance with claim 24, **characterised in that** the first insert and the second insert are introduced into the tool such that the edges of the inserts facing one another are adjacent to one another in an obtuse manner.

26. A method in accordance with one of the claims 22 to 25, **characterised in that** the application of the substrate takes place by back injection moulding, in particular by the in-mould process, by foaming or by back pressing.

## Revendications

1. Composant de décor comprenant un premier insert et un second insert ainsi qu'au moins un substrat, avec lequel le premier et/ou le second insert sont remplis, le premier et le second insert formant au moins partiellement la surface visible du composant, le premier et le second insert étant complètement ou partiellement à base de matériaux différents et/ou étant conçus complètement ou partiellement différemment, le composant de décor étant fabriqué dans un seul outil.

2. Composant de décor selon la revendication 1, **caractérisé en ce que**, en ce qui concerne les inserts, il s'agit de films ou de couches minces.

3. Composant de décor selon la revendication 1 ou 2, **caractérisé en ce qu'**au moins l'un des inserts est à base de métal véritable ou présente du métal véritable.

4. Composant de décor selon l'une quelconque des revendications précédentes, **caractérisé en ce qu'**au moins l'un des inserts est à base de matière synthétique ou présente de la matière synthétique.

5. Composant de décor selon l'une quelconque des revendications précédentes, **caractérisé en ce qu'**au moins l'un des inserts est à base de bois ou présente du bois.

6. Composant de décor selon l'une quelconque des revendications précédentes, **caractérisé en ce qu'**au moins l'un des inserts est à base de carbone ou de fibres de carbone ou présente du carbone ou des fibres de carbone.

7. Composant de décor selon l'une quelconque des revendications précédentes, **caractérisé en ce qu'**au moins l'un des inserts est à base de textile ou présente du textile.

8. Composant de décor selon l'une quelconque des revendications précédentes, **caractérisé en ce qu'**au moins l'un des inserts est à base de verre ou de fibres de verre ou présente du verre ou des fibres de verre.

9. Composant de décor selon l'une quelconque des ) revendications précédentes, **caractérisé en ce qu'**au moins l'un des inserts est à base de cuivre ou présente du cuivre.

10. Composant de décor selon l'une quelconque des revendications précédentes, **caractérisé en ce qu'**au moins l'un des inserts présente un ou plusieurs composants fonctionnels.

11. Composant de décor selon la revendication 10, **caractérisé en ce que**, en ce qui concerne la ou les composants fonctionnels, il s'agit de composants lumineux de l'insert.

12. Composant de décor selon la revendication 10 ou 11, **caractérisé en ce que**, en ce qui concerne au moins l'un des inserts, il s'agit d'un film lumineux.

13. Composant de décor selon l'une quelconque des revendications précédentes, **caractérisé en ce que** le substrat est appliqué par surmoulage par injection, en particulier par le procédé In-Mold, par moussage ou par surmoulage par compression.

14. Composant de décor selon l'une quelconque des revendications précédentes, **caractérisé en ce que** le premier et/ou le second insert sont conçus avec une couche ou plusieurs couches.

15. Composant de décor selon l'une quelconque des revendications précédentes, **caractérisé en ce que** le premier et/ou le second insert sont préformés ou ne sont pas préformés.

16. Composant de décor selon l'une quelconque des revendications précédentes, **caractérisé en ce que** le premier et/ou le second insert présentent un agent adhésif ou un produit améliorant l'adhérence et/ou sont prétraités, de telle sorte que l'adhérence du ou des inserts sur le ou les substrats est améliorée.

17. Composant de décor selon l'une quelconque des revendications précédentes, **caractérisé en ce que** le premier et/ou le second insert sont dotés d'un film plastique ou d'un film de barrière réalisé d'une autre façon.

18. Composant de décor selon l'une quelconque des revendications précédentes, **caractérisé en ce que** le premier et/ou le second insert sont appliqués par le procédé IMD (In-Mold Decoration).

19. Composant de décor selon l'une quelconque des revendications précédentes, le premier et le second insert étant juxtaposés directement ou indirectement côte à côte.

20. Composant de décor selon la revendication 19, **caractérisé en ce que** le composant de décor présente une cavité et **en ce que** la zone, dans laquelle les inserts sont juxtaposés, est disposée dans la cavité.

21. Véhicule automobile comprenant au moins un composant de décor selon l'une quelconque des revendications 1 à 20.

22. Procédé pour fabriquer un composant selon l'une quelconque des revendications 1 à 20, **caractérisé en ce que** la fabrication du composant s'effectue dans un seul outil.

23. Procédé selon la revendication 22, **caractérisé en ce que** le premier et/ou le second insert est/sont introduit(s) par le procédé IMD (In-Mold Decoration) dans l'outil.

24. Procédé selon l'une quelconque des revendications 22 ou 23, **caractérisé en ce que** d'abord le premier et le second insert sont séparés ou sont introduits dans l'outil dans l'état relié et l'application du substrat s'effectue ensuite.

25. Procédé selon la revendication 24, **caractérisé en ce que** le premier et le second insert sont introduits dans l'outil, de telle sorte que les arêtes tournées les unes vers les autres des inserts sont juxtaposées côté à côte.

26. Procédé selon l'une quelconque des revendications 22 à 25, **caractérisé en ce que** l'application du substrat s'effectue par surmoulage par injection, en particulier par le procédé In-Mold, un moussage ou par surmoulage par compression.
